(19) Europäisches Patentamt
European Patent Office
Office européen des brevets

(11) **EP 2 723 030 A1**

(12) **EUROPEAN PATENT APPLICATION**

(43) Date of publication:
**23.04.2014 Bulletin 2014/17**

(51) Int Cl.:
**H04L 27/26** *(2006.01)*    **H04L 1/00** *(2006.01)*
**H04L 1/20** *(2006.01)*

(21) Application number: **13368036.3**

(22) Date of filing: **02.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.10.2012 EP 12306274
01.11.2012 US 201261721173 P**

(71) Applicant: **ST-Ericsson SA
1228 Plan-les-Ouates (CH)**

(72) Inventor: **Dhayni, Achraf
06220 Vallauris (FR)**

(74) Representative: **Verdure, Stéphane et al
Cabinet Plasseraud
52, rue de la Victoire
FR-75440 Paris Cedex 09 (FR)**

(54) **LLR weighting to enhance performances of soft decision at low SNR values**

(57)    In a method of signal processing in an OFDM receiver each received symbol is used to calculate a normalized signal to noise ratio (NSNR=Eb/N0) (S3). The NSNR is used to select an optimised weight value (w) (S10). The weight value (w) is used in the calculation of a log likelihood ratio (LLR) (S12, S14) which is associated with the symbol when the symbol is applied to a decoder (S9). The weight value is determined to be one, or (at least in effect) no weight value is calculated or applied when the NSNR is equal to or greater than a predetermined threshold value (S4). An OFDM receiver adapted to implement the method is also described.

Fig 7

Printed by Jouve, 75001 PARIS (FR)

**Description**

**FIELD OF THE INVENTION**

The present invention relates to a method of compensating for interference of received symbols in an orthogonal frequency division multiplexing (OFDM) receiver and a receiver to compensate for interference in a received OFDM signal.

**BACKGROUND OF THE INVENTION**

In OFDM receivers, it is known to implement a LLR (Log Likelihood Ratio) technique, upstream of the decoder (the decoder can be a Viterbi, LDPC, ...), in order to enhance the reliability of signal detection. LLR techniques can be based on hard decision or soft decision.
Having optimal soft decisions rather than hard decisions at the demodulator allows the Viterbi decoder to give superior bit error rate (BER) performance at the receiver. The idea of soft decisions is to provide the next stage of decoding with some reliability information for the input bits in addition to their probable values.
Solutions exist for producing the soft-decision values.
For simplicity, some explanation can be given in the context of a SISO (Single Input, Single Output) system.
The received signal for the SISO system, y, can be represented by:

$$y = h.x + z$$

where x is the transmitted signal, h is the complex flat fading channel gain, and z is the additive white Gaussian noise.
In this SISO system, the signal can be detected by the simple inverse processing on the received signal, that is,

$$\widetilde{x} = \frac{y}{h} = x + \frac{z}{h} = x + \widetilde{z}$$

where $\widetilde{z} = z/h$.

If z is Gaussian-distributed with zero mean and variance of $\sigma_z^2$, $\widetilde{z}$ is also a Gaussian random variable. Then the conditional PDF (probability density function) that $\widetilde{x}$ is received given that a symbol x was transmitted is:

$$f_{\widetilde{x}}(\widetilde{x}|x) = \frac{1}{\sqrt{2\pi\sigma^2}} \exp\left(-\frac{|\widetilde{x}-x|^2}{2\sigma^2}\right)$$

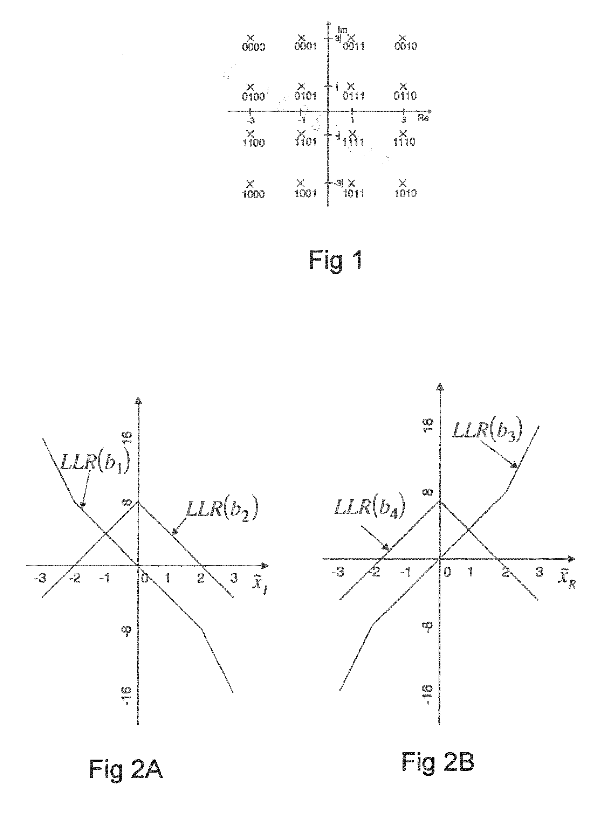

An example of soft-decision detection for the gray-encoded 16-QAM (Quadrature Amplitude Modulation) symbols is described in relation to Figure 1 which illustrates a gray-encoded 16-QAM constellation. $S_l^+$ and $S_l^-$ denote respectively a set of the symbols whose $l^{th}$ bit is 1, and a set of symbols whose $l^{th}$ bit is 0. Referring to the 16-QAM constellations in Figure 1, for example, $S_l^+$ and $S_l^-$ are given as:

$$S_l^+ = \{-3+3j, -1+3j, 1+3j, 3+3j, -3+j, -1+j, 1+j, 3+j\}$$

$$S_l^- = \{-3-3j, -1-3j, 1-3j, 3-3j, -3-j, -1-j, 1-j, 3-j\}$$

The LLR value indicates how much a received bit is likely to be logic "1" (when sent by the transmitter). LLR = 0 means that there is 50% probability that the transmitted bit is "1" and 50% "0". A big positive LLR value means that there is high probability that the transmitted bit is "1". A big negative LLR value means that there is high probability that the transmitted bit is "0".

The $1_{th}$ log likelihood ratio (LLR) value which is the soft output for the $l_{th}$ bit $b_l$ is proved to be:

$$LLR(b_l) \approx \left| \tilde{x} - x_{l,opt}^- \right|^2 - \left| \tilde{x} - x_{l,opt}^+ \right|^2$$

When the variance of the noise does not change during a received symbol, and where:

$$x_{l,opt}^+ = \arg \min_{x \in S_l^+} \left| \tilde{x} - x \right|^2$$

$$x_{l,opt}^- = \arg \min_{x \in S_l^-} \left| \tilde{x} - x \right|^2$$

According to the LLR equation above, if we take the case of a 16-QAM 4-bit received symbol $\tilde{x} = \tilde{x}_R + j\tilde{x}_1$, the LLR of each of the 4 bits of $\tilde{x} = \tilde{x}_R + j\tilde{x}_1$ are derived according to the graph depicted in FIG. 2.

More precisely, FIGS. 2a and 2b depict the LLR as functions of the real or imaginary part of the received symbol, for the case of the 16-QAM constellation presented in Figure 1.

FIG. 2a corresponds to first and second bit LLR, respectively LLR(b1) and LLR(b2).

FIG. 2b corresponds to third and fourth bit LLR, respectively LLR(b3) and LLR(b4).

As previously already said, a soft-decision decoder can improve the performances over a hard-decision decoder.

FIG. 3 shows performance difference between hard-decision and soft-decision detection according to some simulation performed by the inventor. The simulation bench simulates an OFDM packet that has a length of 1200 bits, forward-error-corrected by convolutional coder with a coding rate of 1/2 and constraint length of 7, implemented by the generator polynomials [1001111] and [1101101]. Therefore, the encoded data sequence is mapped into [1200÷(1/2)]/4=600 16-QAM symbols. Furthermore, each symbol is subject to independent Rayleigh fading.

Taking the example of the 16-QAM received 4-bit symbol. The implementation of the soft-decision decoder is according to the following:

1. In the receiver: the real and imaginary values of the received symbol are calculated after applying time and frequency synchronization and channel equalization.
2. According to the imaginary value of the received symbol, LLR(b1) and LLR(b2) are calculated according to figure 2(a).
3. According to the real value of the received symbol, LLR(b3) and LLR(b4) are calculated according to figure 2(b).
4. LLR(b1), LLR(b2), LLR(b3) and LLR(b4) are entered to the Viterby or LDPC decoder where the decoding occurs.

From these simulations, it is clear that soft-decision detection can, but only under certain conditions provide a significant performance gain in the packet error rate (PER) over the hard-decision packet error rate. The present invention seeks to alleviate the technical prejudice and enhance the performance of the prior art soft-decision method in an OFDM receiver.

**Statement of Invention**

A method of compensating for interference of received symbols in an orthogonal frequency division multiplexing (OFDM) receiver comprising:

receiving an OFDM symbol;

calculating an LLR; and
applying the OFDM symbol with the calculated LLR to a decoder;
characterized by the steps of
calculating an NSNR for the signal;
comparing the NSNR to a predetermined threshold NSNR;
determining a weight when the comparison of NSNR and threshold NSNR
indicates the NSNR is less than the threshold NSNR;
calculating the LLR using the determined weight.

According to a second aspect of the present invention there is provided an OFDM receiver with soft-decision detection comprising:

a symbol processor module to receive each symbol; and
an LLR module responsive to the symbol processor module to calculate an LLR for each symbol and to apply the LLR to the OFDM symbol;
**characterized in that** the receiver includes;
an NSNR estimator module to estimate the NSNR for the signal;
a comparator to compare the NSNR to a predetermined threshold value;
a weight value module to determine a weight value in response to the estimated NSNR being less than the threshold NSNR value;
said LLR module responsive to the weight value module to determine a weighted LLR, and
applying the OFDM and symbol to the decoder.

NSNR is a normalized signal to noise ratio of the energy per bit to noise power spectral density or $E_b/N_o$. $E_b/N_0$ is equal to the SNR divided by the "gross" link spectral efficiency in(bit/s)/Hz, where the bits in this context are transmitted data bits, inclusive of error correction information and other protocol overhead. NSNR is an important parameter in digital communication or data transmission. NSNR is also known as the "SNR per bit". It is especially useful when comparing the bit error rate (BER) performance of different digital modulation schemes without taking bandwidth into account.
Preferably the predetermined NSNR is between 1 and 10, more preferably between 4dB and 8dB and preferably substantially 8dB.
The weight value can be determined by a comparator which compares an estimated NSNR with a predetermined threshold NSNR. When the NSNR is greater than or equal to the predetermined NSNR no weight (ie, effectively a weight of unity) is applied to the LLR calculation, when the weight is less than the predetermined LLR threshold, a predetermined weight of less than unity is applied to the LLR calculation.
In a preferred embodiment the weight applied may be determined to decrease in accordance with a decrease in the value of NSNR, so that it is small when NSNR is small and increases progressively or discretely to unity when the NSNR is above a maximum threshold value. Such weight values may be determined by comparison of NSNR with predetermined ranges of NSNR in a lookup table, each range of NSNR corresponding to a respective weight.
The weights applied to the calculation of the LLR may be looked up in a look up table in response to the output of the NSNR calculator. The weights may vary from 0 to 1 (0 to 100%) but will preferably be a value between these extremes.
Broadly the method and receiver of the invention is to apply a log likelihood ratio (LLR) scaling technique to received symbols to obtain scaled symbols as an input for a decoder of the OFDM receiver according to the observation that gain is positive (i.e., an improvement) for LLR scaling only when the Eb/N0 is greater than 4dB and less than 8dB (which is a situation that occurs frequently in real life).The present invention takes advantage of soft decision decoding, even for low values of the NSNR by improving the way weights are used for the calculation of the log likelihood ratio (LLR).

**BRIEF DESCRIPTION OF THE DRAWINGS**

A method of compensating for interference of received symbols in an orthogonal frequency division multiplexing (OFDM) receiver, and a receiver with soft decision LLR interference compensation, will now be described, by way of example only, with reference to the accompanying figures, in which:

FIG. 1 illustrates a gray-encoded 16-QAM constellation;
FIGS. 2a and 2b depict the LLR as functions of the real or imaginary part of the received symbol, for the case of the same 16-QAM constellation;

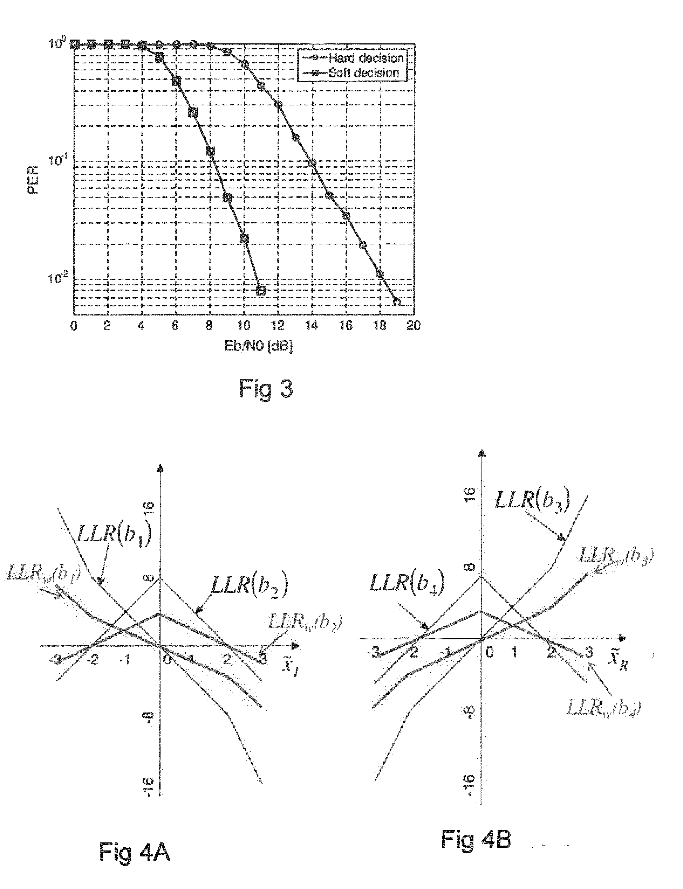

FIG. 3 shows performance difference between hard-decision and soft-decision detection according to some simulation performed by the inventor;

FIGS. 4a and 4b show the weighted LLR (LLR$_W$) as functions of the real part or imaginary part of the received symbol, according to an embodiment of the Invention;

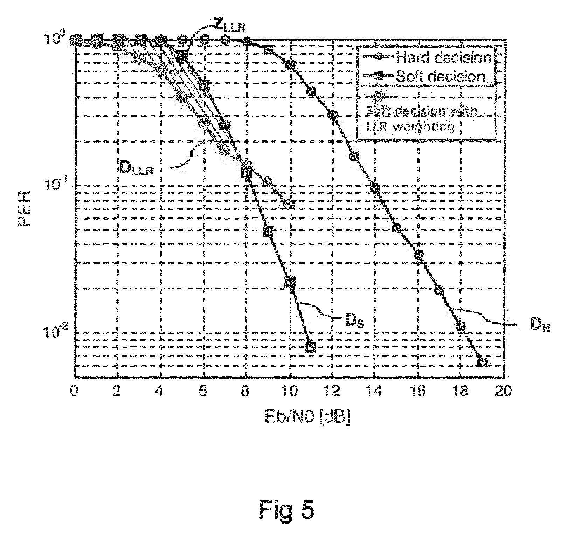

FIG. 5 depicts the packet error performance in the case of a SISO system;

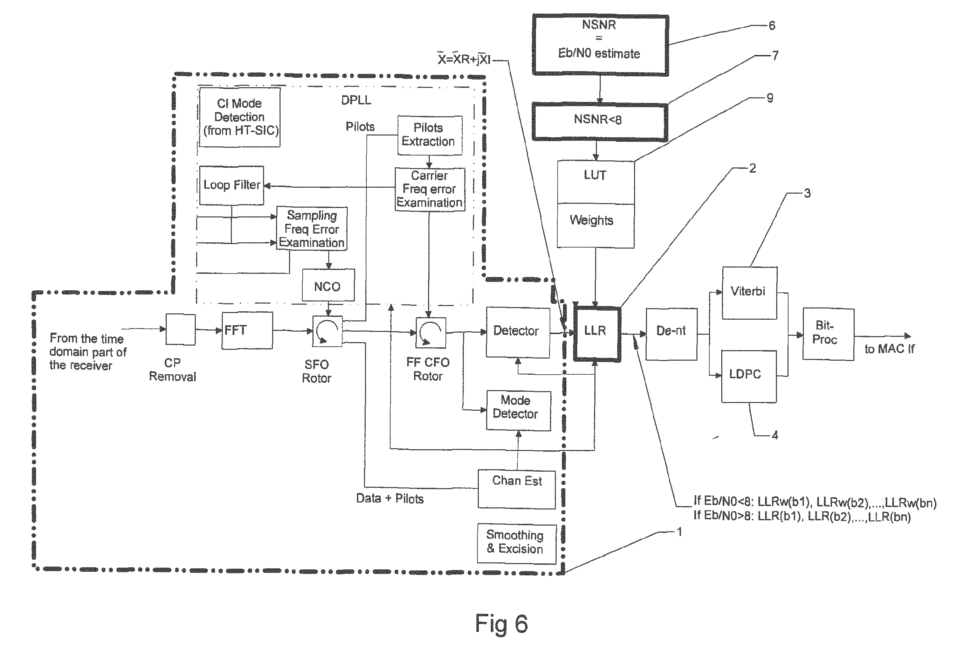

FIG. 6 illustrates a block diagram of the frequency domain of a possible OFDM receiver embodying the invention; and

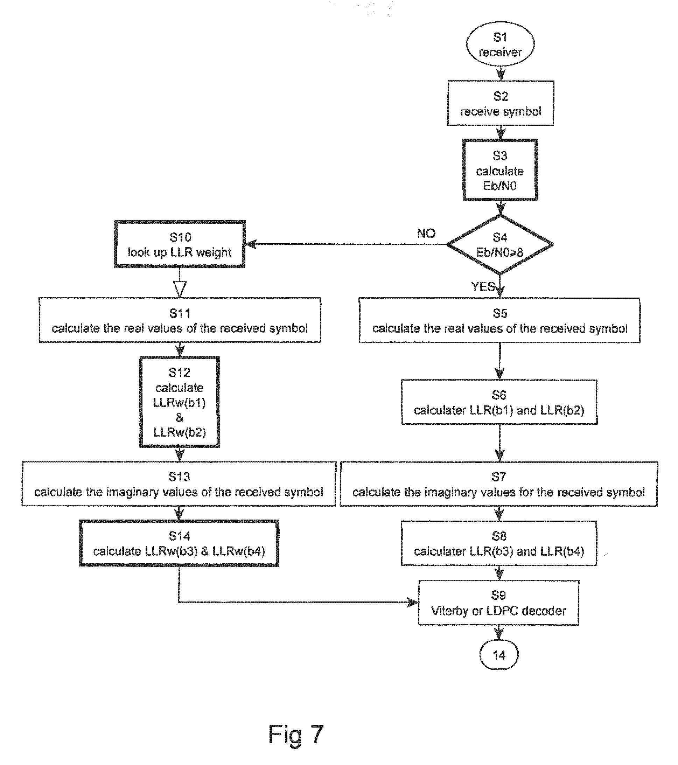

FIG 7 is a flowchart of a method embodying the invention.

## DETAILED DESCRIPTION OF EMBODIMENTS OF THE INVENTION

Figure 6 shows a receiver based on an OFDM WLAN receiver in accordance with the IEEE 802.11 standard. Such a receiver has a symbol processor module 1 which receives QAM symbols (i.e. a constellation point carried on a subcarrier) with an Eb/N$_0$ (energy per bit to noise power spectral density ratio or NSNR) which may be less than 4dB. This limits the performance improvement that is gained by deploying soft-decision instead of hard-decision. This degradation in Eb/N$_0$ is caused mainly by channel multipath fading that leads to the frequency selective dispersive fading that degrades the Eb/N$_0$ at certain subcarrier(s).

The symbol processor module 1 communicates symbols to a log likelihood ratio correction module (LLR) 2 , which calculates a value of LLR for each received symbol and associates the LLR with the symbol before delivery to a Viterbi 3 or LDPC decoder 4.

For each symbol an NSNR estimator 5 calculates NSNR = Eb/N$_0$. The calculated value of NSNR is applied to a comparator 8 which compares the instant NSNR with a predetermined threshold value of NSNR, which in the example is 8 (this value is function of a lot of factors such as: the sensitivity and noise of the receiver design, channel fading and noise, presence of spurious emissions. As an example, Figure 5 shows how this value can be derived by simulation, in this case study the value of the threshold is 8. For a different design, the threshold can be more or less). The output from the comparator is applied to a look up table 9 which looks up a weight to apply to the calculation of the LLR according to the output of the comparator 8. When the NSNR is less than 8 a weight of one half (0.5) is selected and applied to the calculation of the LLR to generate an LLR$_W$ which in turn is associated with a symbol represented as LLR$_W$(b1)...LLR$_W$(bn). When the NSNR exceeds or is equal to 8 a no weight or a weight of one (1) is selected so that the symbol delivered to the Viterbi or LDPC has an un-weighted LLR LLR(b1)...LLR(bn).

Figure 7 illustrates a method example of 16-QAM OFDM 4-bit symbols, received at a receiver:

The receiver method starts at step S1 and receives a symbol (b1...bn) on a specific channel at step S2.

At step S2 the method calculates NSNR (Eb/N$_0$) for subcarriers in real-time.

At step S4 the value of NSNR is compared to a predetermined threshold value (8) to determine if NSNR is less than 8.

If NSNR is greater than or equal to 8dB the method goes to step 5 where the real values (b1 and b2) of the received symbols are calculated. At step S6 log likelihood ratios LLR(b1) and LLR(b2) are calculated for the real values of the received symbol.

At step S7 the imaginary values (b3 and b4) of the received symbol are calculated and log likelihood ratios LLR(b3), LLR(b4) are calculated at step S8.

At step S9 the symbols with associated calculated log likelihood ratios are delivered to the Viterbi or LDPC decoder.

Where the step S4 determines that the subcarrier symbol (16-QAM symbols) suffer from bad NSNR (Eb/N0) because the estimated NSNR is less than 8dB, the method goes to step S10. At step S10 the method looks up a weighting value to apply to the calculation of LLR in the case of bad NSNR, in this case 0.5. The method goers to step S11 where the real values of the received symbol are calculated after applying time and frequency synchronization and channel equalization.

From step S11 the method goes to step S12 where log likelihood ratios LRRw(b1) and LRRw(b2) are calculated according to a weighted-down version of figure 2a, this is depicted in Figure 4a.

At step S13 the imaginary values of the received symbol, (b3) and (b4) are calculated. At step S14 weighted-down values of LLR$_W$(b3) and LLR$_W$(b4) are calculated as depicted in Figure 4b. Finally at step S9 the weighted down values of LRRw(b1), LRRw(b2), LRRw(b3) and LRRw(b4) are entered to the Viterbi or LDPC decoder where the decoding occurs.

It will be understood that the order of steps shown in the method of figure 7 may be varied. Steps 5 to 8 may be omitted simply by the expedient of looking up a weight value according to the output of the comparison step 4, where the weight value can be one for a value of NSNR greater than or equal to the threshold value.

FIGS. 4a and 4b show the LLR$_W$ as functions of the real part or imaginary part of the received symbol, for the case of the 16-QAM constellation presented in FIG 1.

LLR$_W$=LLR*w. w is the weighting factor that is function of the Eb/N$_0$ degradation.

FIG. 4a corresponds to first and second bits LLR, respectively LLR(b1), LLR(b2) and LLR$_W$(b1), LLR$_W$(b2).

FIG. 4b corresponds to third and fourth bit LLR, , respectively LLR(b3), LLR(b4) and LLR$_W$(b3), LLR$_W$(b4).

The curves LLR$_w$(b1), LLR$_w$(b2), LLR$_w$(b3) and LLR$_w$(b4) correspond to the numerical example of w=0.5.

The weighting factor w is related to the estimated Eb/N0; the lower Eb/N0 is, the lower the weighting factor should be. In other words, the lower Eb/N0 is, the lower the likelihood is (LLR gets nearer to 0); i.e. the higher the uncertainty is. Thus the invention contemplates selecting a log likelihood weight value from the lookup table 9 using several different thresholds corresponding to a discrete quantum range of values of NSNR, or calculating the weight value in accordance with the NSNR to produce a progressive range of LLR, the weight value is between zero and one when the NSNR is less than the maximum threshold value. When NSNR is larger of equal the threshold, the weight value is one.

FIG. 5 depicts the Packet error performance in case of a SISO system and shows a comparison between hard decision D$_H$ (according to the prior art) vs. soft decision D$_S$ (according to the prior art) vs. Soft decision with LLR weighting according to an embodiment of the invention D$_{LLR}$.

The hashed area Z$_{LLR}$ indicates the PER vs. Eb/N0 performance gain that this technique can achieve when compared to the classical state-of-the-art soft decision technique.

Brute-force can be used to find the optimal value of w at a certain Eb/N0; by the brute-force simulations Eb/N0 is swept from 0dB to 10dB with a sweeping step of 1dB (x-axis of the D$_{LLR}$ curve in Figure 5). At each Eb/N0 the PER (packet error rate) is simulated while sweeping w from 1 to 0.1 with a sweeping step of 0.1. Finally the optimal w is the one at which a minimum PER is obtained. In this way it is possible to enhance the performance of soft decision at low SNR values, as this is depicted in Figure 5.

FIG. 6 illustrates a block diagram of the frequency domain of a possible OFDM receiver, i.e. after the Fast Fourier Transform (FFT).

The LUT (look-up table) is adapted to save the optimal values of w and their correspondence to the Eb/N0. The w value is applied to the LLR to obtain LLR$_w$ when the Eb/N0 is less than 8dB (according to the example that is shown in Figure 5).

More precisely:

- If Eb/N0 < 8, LLR$_w$(b1), LLR$_w$(b2), LLR$_w$(b3)... LLR$_w$(bn) are passed to the Viterbi decoder.
- If Eb/N0 $\geq$ 8, LLR(b1), LLR(b2), LLR(b3)... LLR(bn) are passed to the Viterbi decoder.

The method of the invention may be implemented in a programmable receiver implementing the method in accordance with machine readable code. Accordingly the invention may be embodied in machine readable code, software packaged for communication to, installation in and/or execution on any such receiver.

The invention has many advantages, among them:

Its implementation is very simple.
It does not imply any analog silicon overhead: the Eb/N0 estimator exists already for normal operation.
It implies only a negligible digital silicon overhead.
It has very good performance.

**Claims**

1. A method of compensating for interference of received symbols in an orthogonal frequency division multiplexing (OFDM) receiver comprising:

   receiving a symbol;
   calculating an LLR;
   associating the symbol with the calculated LLR and
   applying the symbol and associated LLR to a decoder;
   **characterized by** the steps of
   calculating an NSNR for the symbol;
   determining a weight in accordance with the magnitude of the calculated NSNR, and calculating the LLR in accordance with the weight.

2. A method according to claim 1 wherein the weight is determined to be equivalent to a value between 0 and 1 when the calculated NSNR is less than a predetermined threshold value, and unity when the calculated NSNR is greater than or equal to the predetermined threshold value.

3. A method according to claim 2 wherein the calculated NSNR is compared to the threshold value and a predetermined optimised weight is applied to the calculation of the LLR only when the NSNR is less than the threshold value.

4. A method according to any one of the preceding claims wherein the calculated NSNR is compared to predetermined ranges in a look up table, each said range corresponding to a weight, whereby a weight corresponding to the calculated NSNR is selected for calculation of the LLR

5. A method according to claim 4 wherein an optimal weight value is selected for each range of NSNR by simulating the OFDM radio, stepping the NSNR over a range, and measuring the packet error rate for a range of weights.

6. A method according to claim 5 wherein:

   the range of NSNR is 0dB to 10dB, with steps of 1dB;
   the range of weights is from 1 to 0.1 with steps of 0.1 and
   the optimal weight is selected as the weight which produces the lowest packet error rate.

7. According to a second aspect of the present invention there is provided an OFDM receiver with soft-decision detection comprising:

   a symbol processor module (1) to receive each symbol; and
   an LLR module (2) responsive to the symbol processor module (1) to calculate an LLR for each symbol and to apply the LLR to the OFDM symbol;
   a decoder (3,4) to receive the symbol and associated LLR from the LLR module (2);
   **characterized in that** the receiver includes;
   an NSNR estimator module (6) to estimate the NSNR (Eb/N0) for the symbol;
   a weight value module (9) to determine a weight value (w) in response to the estimated NSNR; and
   said LLR module (2) responsive to the weight value module to determine a weighted LLR.

8. A receiver according to claim 1 wherein the LLR module is arranged to determine a weight equivalent to or less than unity when the calculated NSNR is less than a threshold NSNR value.

9. A receiver according to claim 8 wherein a comparator (7) is arranged to compare the calculated NSNR with the threshold NSNR value to determine the application,of the weight to the calculation of the LLR.

10. A receiver according to claim 9 wherein a lookup table (9) is responsive to the NSNR estimator (6) to compare the calculated NSNR with predetermined ranges, each range corresponding to a respective weight, whereby a weight in accordance with the calculated NSNR is selected for calculation of the LLR.

Fig 1

Fig 2A

Fig 2B

Fig 3

Fig 4A

Fig 4B

9

Fig 5

Fig 6

EP 2 723 030 A1

**S1**
receiver

**S2**
receive symbol

**S3**
calculate
Eb/N0

**S4**
Eb/N0>8

NO

YES

**S10**
look up LLR weight

**S11**
calculate the real values of the received symbol

**S5**
calculate the real values of the received symbol

**S12**
calculate
LLRw(b1)
&
LLRw(b2)

**S6**
calculater LLR(b1) and LLR(b2)

**S13**
calculate the imaginary values of the received symbol

**S7**
calculate the imaginary values for the received symbol

**S14**
calculate LLRw(b3) & LLRw(b4)

**S8**
calculater LLR(b3) and LLR(b4)

**S9**
Viterby or LDPC decoder

14

Fig 7

Europäisches
Patentamt

European
Patent Office

Office européen
des brevets

## EUROPEAN SEARCH REPORT

Application Number

EP 13 36 8036

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 019 029 B1 (KATIC OGNJEN [CA]) 13 September 2011 (2011-09-13) * column 6 * * figure 3 * ----- | 1-10 | INV. H04L27/26 H04L1/00 H04L1/20 |
| X | EP 2 288 060 A1 (NIPPON TELEGRAPH & TELEPHONE [JP]) 23 February 2011 (2011-02-23) * figure 9 * * paragraph [[0083]] - paragraph [[0091]] * ----- | 1-10 | |
| X | J H Stott: "Explaining some of the magic of COFDM", Proceedings of 20th International television Symposium 1997, 17 June 1997 (1997-06-17), pages 1-9, XP055097809, Retrieved from the Internet: URL:http://downloads.bbc.co.uk/rd/pubs/reports/1997-04.pdf [retrieved on 2014-01-22] * paragraph [0003] - paragraph [0004] * * paragraph [05.3] * * paragraph [0006] * ----- | 1-10 | |
| X | US 2005/053128 A1 (SHEARER DANIEL D [US] ET AL SHEARER III DANIEL D [US] ET AL) 10 March 2005 (2005-03-10) * paragraph [[0024]] * * paragraph [[0006]] * * figure 3 * * figure 1 * ----- | 1-10 | TECHNICAL FIELDS SEARCHED (IPC) H04L |

The present search report has been drawn up for all claims

| Place of search | Date of completion of the search | Examiner |
|---|---|---|
| Berlin | 24 January 2014 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 36 8036

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2014

| Patent document cited in search report | | Publication date | Patent family member(s) | | Publication date |
|---|---|---|---|---|---|
| US 8019029 | B1 | 13-09-2011 | NONE | | |
| EP 2288060 | A1 | 23-02-2011 | CN | 102090005 A | 08-06-2011 |
| | | | EP | 2288060 A1 | 23-02-2011 |
| | | | KR | 20110016502 A | 17-02-2011 |
| | | | US | 2011107171 A1 | 05-05-2011 |
| | | | WO | 2010010867 A1 | 28-01-2010 |
| US 2005053128 | A1 | 10-03-2005 | US | 2005053128 A1 | 10-03-2005 |
| | | | US | 2009116545 A1 | 07-05-2009 |

EPO FORM P0459

For more details about this annex : see Official Journal of the European Patent Office, No. 12/82